# EUROPÄISCHE PATENTSCHRIFT

(11) **EP 3 211 190 B1**
(45) Veröffentlichungstag und Bekanntmachung des Hinweises auf die Patenterteilung: **17.04.2019**
(21) Anmeldenummer: 16157018.9
(22) Anmeldetag: 23.02.2016
(51) Int. Cl.: F01N 3/20, E03B 7/12, E03B 7/14, F01N 13/18, F16L 53/00, H05B 3/06, H05B 3/58, H05B 3/04, F16L 53/35, F16L 53/38

(54) **VERBINDERANORDNUNG MIT ZUMINDEST EINEM VERBINDER UND ZUMINDEST EINER MEDIENLEITUNG**
CONNECTOR ASSEMBLY WITH AT LEAST ONE CONNECTOR AND AT LEAST ONE FLUID LINE
SYSTEME DE CONNEXION DOTE D'AU MOINS UN CONNECTEUR ET AU MOINS UNE CONDUITE DE FLUIDE

(43) Veröffentlichungstag der Anmeldung: 30.08.2017
(73) Patentinhaber: TI Automotive (Fuldabrück) GmbH, 34277 Fuldabrück (DE)
(72) Erfinder: HÄCKEL, Andre, 34513 Waldeck (DE); FISCHBACH, Gerd, 34582 Borken (DE); BARTHEL, Iris, 34270 Schauenburg (DE); BUBE, Kay, 36277 Schenklengsfeld (DE); WEISSING, Michael, 69120 Heidelberg (DE)
(74) Vertreter: Rohmann, Michael

(56) Entgegenhaltungen:
- EP-A2- 1 777 452
- WO-A1-2013/053478
- DE-A1-102006 060 314
- DE-T5-112008 003 310
- US-A1- 2014 290 214

## Beschreibung

Die Erfindung betrifft eine Verbinderanordnung, insbesondere eine Kraftfahrzeugverbinderanordnung mit zumindest einem Verbinder - vorzugsweise mit zumindest einem Schnellverbinder - und mit zumindest einer an den Verbinder angeschlossenen Medienleitung und mit zumindest einem Wärmeleitelement, wobei die Medienleitung elektrisch beheizt ist und vorzugsweise mittels zumindest eines entlang der Medienleitung verlaufenden Heizmittels elektrisch beheizt ist. - Es liegt im Rahmen der Erfindung, dass die erfindungsgemäße Verbinderanordnung für ein fluides Medium eines Kraftfahrzeuges vorgesehen ist bzw. von dem fluiden Medium eines Kraftfahrzeuges durchströmt wird. Bei diesem fluiden Medium handelt es sich insbesondere um eine wässrige Harnstofflösung. Es liegt fernerhin im Rahmen der Erfindung, dass sowohl der Verbinder als auch die Medienleitung der erfindungsgemäßen Verbinderanordnung von dem fluiden Medium durchströmt werden. Zweckmäßigerweise ist an den Verbinder der Verbinderanordnung eine weitere Medienleitung bzw. Rohrleitung und/oder ein Aggregat, beispielsweise ein Tank oder dergleichen angeschlossen. Bei dem im Rahmen der Erfindung eingesetzten Verbinder handelt es sich vorzugsweise um einen Schnellverbinder, der mit zumindest einem Anschlussende über eine lösbare Rastverbindung mit einer Rohrleitung bzw. mit einer weiteren Medienleitung und/oder mit einem Aggregat verbunden ist.

Verbinderanordnungen der eingangs genannten Art sind aus der Praxis in unterschiedlichen Ausführungsformen bekannt. Es ist auch bekannt, solche Verbinderanordnungen und ihre Bestandteile (Verbinder und Medienleitung) zu beheizen bzw. elektrisch zu beheizen. Eine solche Beheizung ist insbesondere bei der Durchleitung von fluiden Medien in Form von wässrigen Harnstofflösungen zweckmäßig bzw. erforderlich. Solche wässrigen Harnstofflösungen werden im Rahmen von SCR-Katalysatorsystemen, insbesondere für Dieselmotoren eingesetzt. Sie neigen bei niedrigen Temperaturen zum Gefrieren, wodurch die Funktionsfähigkeit des Katalysatorsystems reduziert oder unterbrochen werden kann. Eine Beheizung der Verbinderanordnung bzw. des Verbinders und/oder der Medienleitung für die wässrigen Harnstofflösungen soll hier Abhilfe schaffen. - Bei den aus der Praxis bekannten Verbinderanordnungen ist die Beheizung häufig aufwendig. Bei vielen Anordnungen werden sowohl der Verbinder als auch die Medienleitung mit separaten Heizmitteln beheizt und das macht eine aufwendige Führung, Fixierung und Verdrahtung der Heizmittel erforderlich. Viele bekannte Verbinderanordnungen genügen im Hinblick auf eine ausreichende und funktionssichere Beheizung auch nicht immer allen Anforderungen. Insoweit sind die bekannten Verbinderanordnungen verbesserungsfähig bzw. verbesserungsbedürftig.

Aus DE 2006 060 314 A1 ist eine Verbinderanordnung mit einem Verbinder und einer an dem Verbinder angeschlossenen Medienleitung sowie mit einem Wärmeleitelement bekannt. Im nicht direkt beheizten Verbindungsbereich zwischen der Medienleitung und dem Verbinder ist eine Wärmeleithülse eingebracht. Diese Wärmeleithülse überträgt Wärme von der beheizten Medienleitung und/oder von einem beheizten Innenbereich des Verbinders in den nicht direkt beheizten Verbindungsbereich. Diese Maßnahmen lassen im Hinblick auf eine störungsfreie und funktionssichere Beheizung zu wünschen übrig.

Weiterhin ist aus WO 2013/053478 A1 ein zumindest teilweise beheizbarer Verbinder für eine beheizbare Medienleitung bekannt. Der Verbinder besteht dabei zumindest teilweise aus einem wärmeleitfähigen oder wärmeleitenden Material. Auch die hier offenbarten Maßnahmen haben sich in der Praxis nicht bewährt. - Ähnliches gilt auch für eine in US 2014/290214 A1 offenbarte Verbinderanordnung.

Der Erfindung liegt das technische Problem zugrunde, eine Verbinderanordnung der eingangs genannten Art anzugeben, bei der eine einfache und wenig aufwendige und nichtsdestoweniger funktionssichere Beheizung möglich ist und bei der die vorstehend beschriebenen Nachteile vermieden werden können.

Zur Lösung dieses technischen Problems lehrt die Erfindung eine Verbinderanordnung bzw. Kraftfahrzeugverbinderanordnung mit zumindest einem Verbinder - insbesondere mit zumindest einem Schnellverbinder - und mit zumindest einer an den Verbinder angeschlossenen Medienleitung und mit zumindest einem Wärmeleitelement, wobei die Medienleitung elektrisch beheizt ist - vorzugsweise mittels zumindest eines entlang der Medienleitung verlaufenden Heizmittels elektrisch beheizt ist -, wobei das ein Wärmeleitelement im Übergangsbereich zwischen Verbinder und Medienleitung angeordnet ist, wobei sich das Wärmeleitelement mit einem ersten Wärmeleitabschnitt in die Medienleitung und mit einem zweiten Wärmeleitabschnitt in den Verbinder erstreckt und wobei durch die elektrische Beheizung der Medienleitung das Wärmeleitelement erwärmt bzw. indirekt erwärmt wird und insbesondere bis in den Bereich des Verbinders erwärmt wird bzw. indirekt erwärmt wird, wobei das Wärmeleitelement über zumindest einen Teil seiner Länge L, vorzugsweise über den Großteil seiner Länge L und bevorzugt über seine gesamte Länge L als Schraubenfeder ausgebildet ist. - Eine besonders empfohlene Ausführungsform der Erfindung ist dadurch gekennzeichnet, dass sich zumindest 15 %, vorzugsweise zumindest 20 % und bevorzugt zumindest 25 % der Länge des Wärmeleitelementes in einen elektrisch beheizten Leitungsabschnitt der Medienleitung erstrecken. Zweckmäßigerweise erstrecken sich zumindest 30 % und bevorzugt zumindest 35 % der Länge des Wärmeleitelementes in einen elektrisch beheizten Abschnitt der Medienleitung.

Der Erfindung liegt die Erkenntnis zugrunde, dass bei der erfindungsgemäßen Verbinderanordnung lediglich eine elektrische Beheizung der Medienleitung erforderlich ist und dass nichtsdestoweniger mittels des erfindungsgemäßen Wärmeleitelementes der Verbinder funktionssicher und effektiv erwärmt bzw. mitbeheizt werden kann. Das Wärmeleitelement wird durch die elektrische Beheizung der Medienleitung gleichsam indirekt erwärmt. Vorzugsweise ist kein direkter Kontakt zwischen dem Heizmittel für die elektrische Beheizung der Medienleitung und dem Wärmeleitelement vorgesehen. Es empfiehlt sich, dass das Heizmittel durch die Wandung bzw. durch eine Wandung der Medienleitung von dem Wärmeleitelement getrennt ist. Diese Wandung der Medienleitung besteht zweckmäßigerweise aus Kunststoff bzw. im Wesentlichen aus Kunststoff. Es liegt im Rahmen der Erfindung, dass der Verbinder lediglich mittels des Wärmeleitelementes über die Beheizung der Medienleitung mitbeheizt wird und dass keine zusätzliche aktive Beheizung des Verbinders erfolgt.

Die erfindungsgemäße Verbinderanordnung ist insbesondere für die Durchleitung eines fluiden Mediums eines Kraftfahrzeuges vorgesehen, wobei das fluide Medium sowohl den Verbinder als auch die daran angeschlossene Medienleitung durchströmt. Bei dem fluiden Medium handelt es sich vorzugsweise um eine Harnstofflösung bzw. um eine wässrige Harnstofflösung. - Gemäß einer bevorzugten Ausführungsform der Erfindung besteht die Medienleitung aus Kunststoff bzw. im Wesentlichen aus Kunststoff und/oder besteht der Verbinder aus Kunststoff bzw. im Wesentlichen aus Kunststoff. Bei dem Kunststoff handelt es sich gemäß einer Ausführungsform der Erfindung um einen wärmeleitfähigen Kunststoff. - Das Wärmeleitelement besteht zumindest teilweise, vorzugsweise zum größten Teil und empfohlenermaßen vollständig aus einem metallischen Werkstoff, beispielsweise aus Stahl, Kupfer oder dergleichen.

Der Verbinder der erfindungsgemäßen Verbinderanordnung ist vorzugsweise als Schnellverbinder (Quick Connector) ausgebildet. Dieser Schnellverbinder weist an zumindest einem Anschlussende - vorzugsweise an lediglich einem Anschlussende - eine Rastverbindung für den rastenden Anschluss einer Medienleitung bzw. Rohrleitung und/oder eines Aggregates, beispielsweise eines Tanks oder dergleichen auf. - Es liegt im Rahmen der Erfindung, dass bei der erfindungsgemäßen Verbinderanordnung die Medienleitung bzw. die beheizte Medienleitung in den Verbinder - insbesondere in einen Anschlussstutzen des Verbinders - eingreift. Es empfiehlt sich, dass die beheizte Medienleitung unlösbar an dem zugeordneten Anschlussende des Verbinders angeschlossen ist. Zweckmäßigerweise ist an einem weiteren bzw. an dem anderen Anschlussende des Verbinders eine Rastverbindung bzw. eine Rastverbindung eines Schnellverbinders vorgesehen. Gemäß einer Ausführungsvariante ist die beheizte Medienleitung mit dem zugeordneten Anschlussende des Verbinders stoffschlüssig verbunden, insbesondere verschweißt und/oder verklebt. Grundsätzlich sind auch andere Anschlussarten denkbar, beispielsweise eine Verschraubung oder dergleichen.

Gemäß bevorzugter Ausführungsform der Erfindung wird die Medienleitung mittels eines elektrischen Heizmittels bzw. Heizelementes elektrisch beheizt. Als elektrisches Heizelement kann insbesondere ein Heizdraht oder eine Heizfolie eingesetzt werden. Nach einer Ausführungsvariante der Erfindung wird das Heizelement bzw. der Heizdraht entlang der Medienleitung, insbesondere parallel zur Medienleitung geführt. Eine empfohlene Ausführungsform der Erfindung ist dadurch gekennzeichnet, dass die Medienleitung mittels zumindest eines um die Medienleitung gewickelten Heizelementes, insbesondere mittels zumindest eines um die Medienleitung gewickelten Heizdrahtes elektrisch beheizt wird. Zweckmäßigerweise ist der zumindest eine Heizdraht spiralförmig um die Medienleitung gewickelt angeordnet. Nach einer Ausführungsvariante ist in dem elektrisch beheizten Leitungsabschnitt der Medienleitung, in den sich das Wärmeleitelement erstreckt zumindest bereichsweise eine engere Wicklung des Heizdrahtes vorgesehen als in den übrigen Bereichen der Medienleitung. Engere Wicklung des Heizdrahtes meint dabei insbesondere, dass der Abstand der Wicklungen geringer ist als in den übrigen Bereichen der Medienleitung.

Eine empfohlene Ausführungsform der Erfindung zeichnet sich dadurch aus, dass die Medienleitung ein Innenrohr und zumindest ein das Innenrohr zumindest bereichsweise umgebendes Hüllrohr aufweist. Zweckmäßigerweise erstreckt sich das Hüllrohr über dem größten Teil der Länge der Medienleitung bzw. des Innenrohrs und umgibt das Innenrohr dabei über den gesamten Umfang des Innenrohrs. Das Hüllrohr ist nach einer Ausführungsvariante der Erfindung als Wellrohr ausgebildet. Grundsätzlich können aber auch andere Hüllrohrarten eingesetzt werden. Es empfiehlt sich, dass das zumindest eine Heizmittel bzw. Heizelement, insbesondere der zumindest eine Heizdraht zwischen dem Innenrohr und dem das Innenrohr umgebenden Hüllrohr angeordnet ist. Empfohlenermaßen ist dabei das zumindest eine Heizmittel bzw. Heizelement bzw. der zumindest eine Heizdraht um das Innenrohr gewickelt und bevorzugt spiralförmig gewickelt. Alternativ oder zusätzlich kann sich das Heizmittel bzw. Heizelement und bevorzugt der Heizdraht auch entlang des Innenrohres erstrecken, insbesondere parallel zum Innenrohr erstrecken.

Eine sehr empfohlene Ausführungsform der Erfindung ist dadurch gekennzeichnet, dass die Medienleitung bzw. das Innenrohr der Medienleitung einen hüllrohrfreien Endabschnitt aufweist, und dass bevorzugt dieser hüllrohrfreie Endabschnitt an den Verbinder angeschlossen ist und zweckmäßigerweise in den Verbinder eingreift. Es liegt im Rahmen der Erfindung, dass der Endabschnitt der Medienleitung zumindest bereichsweise elektrisch beheizt ist, wobei vorzugsweise das zumindest eine Heizmittel bzw. Heizelement bzw. der zumindest eine Heizdraht um den Endabschnitt gewickelt ist und zweckmäßigerweise spiralförmig um den Endabschnitt gewickelt ist. Nach einer Ausführungsform der Erfindung sind die Wicklungen des Heizelementes bzw. des Heizdrahtes auf dem Endabschnitt enger als im übrigen Bereich bzw. als in dem von dem Hüllrohr umgebenen Bereich der Medienleitung. Die Wicklungen bzw. die spiralförmigen Wicklungen haben dann an dem Endabschnitt geringere Abstände als in den übrigen Bereichen der Medienleitung bzw. als in dem von einem Hüllrohr umgebenen Bereich der Medienleitung.

Eine bevorzugte Ausführungsform der Erfindung zeichnet sich dadurch aus, dass zumindest ein Fixierungselement zur Fixierung des zumindest einen Heizmittels bzw. Heizelementes bzw. zur Fixierung des zumindest einen Heizdrahtes auf dem Endabschnitt der Medienleitung angeordnet bzw. befestigt ist. Zweckmäßigerweise deckt dabei das Fixierungselement das auf dem Endabschnitt (des Innenrohres) angeordnete bzw. aufgewickelte Heizmittel bzw. Heizelement ab. Nach einer Ausführungsvariante wird als Fixierungselement ein Schrumpfschlauchabschnitt eingesetzt. Vorzugsweise wird dieser Schrumpfschlauch bzw. Schrumpfschlauchabschnitt im Übergangsbereich des von dem Hüllrohr abgedeckten Innenrohres und des hüllrohrfreien Endabschnittes des Innenrohres verwendet, wobei der Schrumpfschlauchabschnitt dann bereichsweise auf das Hüllrohr aufgeschrumpft ist und bereichsweise auf den mit dem zumindest einen Heizelement versehenen Endabschnitt aufgeschrumpft ist. Der Schrumpfschlauch bzw. Schrumpfschlauchabschnitt erfüllt dabei insbesondere auch eine Abdichtungsfunktion und dient beispielsweise zum Abdichten gegen Wasser. - Gemäß einer Ausführungsform der Erfindung wird als Fixierungselement eine zylinderförmige Schutzhülse eingesetzt, die das zumindest eine auf dem Endabschnitt aufgebrachte Heizmittel bzw. Heizelement abdeckt. Eine bevorzugte Ausführungsform zeichnet sich dadurch aus, dass - wie vorstehend erläutert - im Übergangsbereich zwischen dem vom Hüllrohr abgedeckten Innenrohr und dem hüllrohrfreien Endabschnitt ein Schrumpfschlauchabschnitt als Fixierungselement bzw. Abdichtungselement eingesetzt wird und dass in dem an den Schrumpfschlauchabschnitt angrenzenden Bereich des Endabschnittes eine den Endabschnitt umgebende Schutzhülse als Fixierungselement verwendet wird. Zweckmäßigerweise deckt die Schutzhülse den verbleibenden Bereich des Endabschnittes zwischen Schrumpfschlauchabschnitt und Verbinder ab bzw. weitgehend ab. Es empfiehlt sich, dass eine vorzugsweise für den Verbinder vorgesehene äußere Schutzhülle sowohl den Verbinder als auch - zumindest bereichsweise - den Endabschnitt der Medienleitung abdeckt. Bevorzugt deckt die äußere Schutzhülle des Verbinders das zumindest eine auf dem Endabschnitt angeordnete Fixierungselement zur Fixierung des zumindest einen Heizelementes ab. Gemäß einer Ausführungsvariante wird durch die äußere Schutzhülle des Verbinders sowohl ein auf den Endabschnitt aufgebrachter Schrumpfschlauchabschnitt als auch die auf den Endabschnitt aufgebrachte Schutzhülse abgedeckt. Nach einer Ausführungsform kann die äußere Schutzhülle des Verbinders von einem äußeren Gehäuse gebildet werden, das zweckmäßigerweise aus mehreren Gehäuseabschnitten, insbesondere aus zwei Gehäusehälften zusammengesetzt wird. Nach einer anderen Ausführungsform der Erfindung wird die äußere Schutzhülle des Verbinders als Umspritzung mit einem thermoplastischen Kunststoff realisiert. Die äußere Schutzhülle des Verbinders kann aber auch mittels eines Schrumpfschlauches, durch Umwickeln mit einem geeigneten Wickelmaterial und/oder durch Vergießen mit duroplastischen Kunststoffen realisiert werden.

Es liegt im Rahmen der Erfindung, dass das Wärmeleitelement indirekt beheizt wird und bevorzugt lediglich indirekt beheizt wird. Zweckmäßigerweise erfolgt keine direkte Beheizung und insbesondere keine direkte elektrische Beheizung des Wärmeleitelementes. Es liegt fernerhin im Rahmen der Erfindung, dass das Wärmeleitelement mit dem ersten Wärmeleitabschnitt in den Endabschnitt bzw. in den elektrisch beheizten Endabschnitt der Medienleitung eingreift. Grundsätzlich kann das Wärmeleitelement sich auch noch über den Endabschnitt hinaus in die Medienleitung erstrecken und somit in einen von einem Hüllrohr umgebenen Abschnitt der Medienleitung erstrecken. Es empfiehlt sich, dass zumindest 50 %, vorzugsweise zumindest 60 %, empfohlenermaßen zumindest 70 %, bevorzugt zumindest 75 %, sehr bevorzugt zumindest 80 % und besonders bevorzugt zumindest 85 % der Länge des ersten sich in die Medienleitung erstreckenden Wärmeleitabschnittes des Wärmeleitelementes in dem Endabschnitt angeordnet sind.

Eine sehr empfohlene Ausführungsform der Erfindung ist dadurch gekennzeichnet, dass das Wärmeleitelement bzw. der erste Wärmeleitabschnitt des Wärmeleitelementes zumindest bereichsweise an der Innenwandung der Medienleitung anliegt und insbesondere an der Innenwandung des Endabschnittes der Medienleitung anliegt. Es liegt im Rahmen der Erfindung, dass das Wärmeleitelement bzw. der erste Wärmeleitabschnitt über den gesamten Umfang an der Innenwandung der Medienleitung bzw. des Endabschnittes anliegt. Vorzugsweise liegt das Wärmeleitelement bzw. der erste Wärmeleitabschnitt des Wärmeleitelementes klemmend bzw. mit Klemmsitz an der Innenwandung der Medienleitung bzw. an der Innenwandung des Endabschnittes an.

Eine empfohlene Ausführungsform der Erfindung zeichnet sich dadurch aus, dass der sich in den Verbinder erstreckende zweite Wärmeleitabschnitt des Wärmeleitelementes zumindest bereichsweise mit Abstand zur Innenwandung des Verbinders und/oder mit Abstand zur Innenwandung einer an den Verbinder angeschlossenen bzw. in den Verbinder eingesteckten Rohrleitung angeordnet ist. Dabei ist empfohlenermaßen der größte Teil der Länge und zweckmäßigerweise zumindest 70 %, vorzugsweise zumindest 75 % und bevorzugt zumindest 80 % der Länge des sich in den Verbinder erstreckenden zweiten Wärmeleitabschnittes des Wärmeleitelementes mit Abstand zur Innenwandung des Verbinders und/oder mit Abstand zur Innenwandung der in den Verbinder eingesteckten Rohrleitung angeordnet. Es liegt im Rahmen der Erfindung, dass dabei das Wärmeleitelement bzw. der zweite Wärmeleitabschnitt über den gesamten Umfang mit Abstand zur Innenwandung des Verbinders bzw. zur angeschlossenen/eingesteckten Rohrleitung angeordnet ist.

Nach bevorzugter Ausführungsform der Erfindung erstrecken sich zumindest 20 %, vorzugsweise zumindest 25 % und bevorzugt 30 % der Länge des Wärmeleitelementes in den Verbinder. Dieser prozentuale Längenbereich entspricht dann der Länge des zweiten Wärmeleitabschnittes des Wärmeleitelementes. - Es liegt im Übrigen im Rahmen der Erfindung, dass der Verbinder - abgesehen von der Erwärmung bzw. Beheizung durch das Wärmeleitelement - unbeheizt ausgeführt ist, insbesondere ohne elektrische Beheizung ausgebildet ist. Insoweit kann auf eine aufwendige zusätzliche Beheizung des Verbinders in vorteilhafter Weise verzichtet werden.

Gemäß einer besonders empfohlenen Ausführungsform der Erfindung erstreckt sich das Wärmeleitelement linear bzw. im Wesentlichen linear im Übergangsbereich zwischen Verbinder und Medienleitung. Zweckmäßigerweise sind zumindest 50 %, empfohlenermaßen 60 %, vorzugsweise zumindest 75 %, bevorzugt zumindest 80 %, sehr bevorzugt zumindest 85 % und besonders bevorzugt zumindest 90 % der Länge L des Wärmeleitelementes linear bzw. geradlinig ausgebildet. Es liegt im Rahmen der Erfindung, dass das Wärmeleitelement zumindest über den Großteil seiner Länge L und vorzugsweise über seine gesamte Länge einen runden bzw. kreisrunden Querschnitt aufweist. Vorzugweise ist das Wärmeleitelement über den Großteil seiner Länge L und bevorzugt über seine gesamte Länge L zylinderförmig bzw. mit zylinderförmiger Kontur ausgeführt.

Erfindungsgemäß ist das Wärmeleitelement zumindest über einen Teil seiner Länge L, vorzugsweise über den Großteil seiner Länge L und bevorzugt über seine gesamte Länge L als Schraubenfeder ausgebildet. Der Begriff Schraubenfeder umfasst dabei auch Zug- und Druckfedern und ggf. andere Ausführungsformen. - Die Schraubenfeder erstreckt sich - gemäß oben bereits erwähnter empfohlener Ausführungsform - linear bzw. im Wesentlichen linear im Übergangsbereich zwischen Verbinder und Medienleitung. In einer gebogenen Medienleitung bzw. in einem gebogenen Medienleitungsabschnitt kann die Schraubenfeder aber auch bogenförmig bzw. gebogen ausgebildet sein. Vorzugsweise ist die Schraubenfeder zylinderförmig bzw. zumindest abschnittsweise zylinderförmig ausgeführt. Nach einer Ausführungsvariante hat die Schraubenfeder zumindest über den Großteil ihrer Länge L und empfohlenermaßen über ihre gesamte Länge L einen konstanten Durchmesser bzw. einen konstanten Zylinderdurchmesser (konstanter Durchmesser der Zylinderkontur). Gemäß einer anderen Ausführungsvariante können jedoch auch unterschiedliche Durchmesser bzw. Zylinderdurchmesser der zumindest einen Schraubenfeder verwirklicht werden. So liegt es im Rahmen der Erfindung, dass der Durchmesser bzw. der Zylinderdurchmesser der Schraubenfeder im Verbinder unterschiedlich von dem Durchmesser der Schraubenfeder in der Medienleitung bzw. im Endabschnitt der Medienleitung ist.

Es hat sich bewährt, dass die Windungen bzw. Wicklungen der Schraubenfeder über zumindest einen Teil der Länge L, vorzugsweise über den Großteil der Länge L und bevorzugt über die gesamte Länge L der Schraubenfeder konstante Abstände bzw. im Wesentlichen konstante Abstände voneinander aufweisen. Gemäß besonders empfohlener Ausführungsform der Erfindung besteht die Schraubenfeder aus einem durchgehenden gewundenen Federdraht. Der Federdraht weist dabei vorzugsweise eine Dicke bzw. einen Durchmesser von 0,3 bis 2 mm, bevorzugt von 0,3 bis 1,5 mm und besonders bevorzugt von 0,4 bis 1 mm auf. Zweckmäßigerweise besteht die Schraubenfeder aus Metall bzw. im Wesentlichen aus Metall und vorzugsweise aus Stahl oder aus Kupfer oder aus einer Kupferlegierung. Die Schraubenfeder kann auch aus einem wärmeleitfähigen Kunststoff bzw. im Wesentlichen aus einem wärmeleitfähigen Kunststoff bestehen. Es liegt im Rahmen der Erfindung, dass die Windungen bzw. Wicklungen der Schraubenfeder einen Innenkanal umschließen, der von dem fluiden Medium durchströmt wird. Empfohlenermaßen liegen die Windungen bzw. Wicklungen der Schraubenfeder im Bereich des ersten Wärmeleitabschnittes der Schraubenfeder zumindest über den größten Teil der Länge dieses Abschnittes der Schraubenfeder und bevorzugt über die gesamte Länge dieses Abschnittes der Schraubenfeder an der Innenwandung der Medienleitung bzw. des Innenrohres an und bevorzugt klemmend bzw. mit Klemmsitz an. Dabei kann zum einen ein funktionssicherer Halt des Wärmeleitelementes bzw. der Schraubenfeder gewährleistet werden. Zum anderen kann das Wärmeleitelement in Form der bevorzugten Schraubenfeder auf einfache und wenig kraftaufwendige Weise in die Medienleitung bzw. in das Innenrohr der Medienleitung eingebracht werden und dort beispielsweise einfach eingesteckt und/oder eingeschraubt werden. Die Ausbildung des Wärmeleitelementes als Schraubenfeder hat sich im Rahmen der Erfindung ganz besonders bewährt.
Nach einer anderen Ausführungsform der Erfindung ist das Wärmeleitelement über zumindest einen Teil seiner Länge L, vorzugsweise über den Großteil seiner Länge L als Vollprofilstab ausgebildet. Dieser Vollprofilstab besteht empfohlenermaßen aus Metall bzw. im Wesentlichen aus Metall, beispielsweise aus Stahl oder Kupfer oder einer Kupferlegierung. Wenn das Wärmeleitelement in Form des Vollprofilstabes an der Innenwandung der Medienleitung bzw. des Innenrohres anliegt, erfolgt dieses Anliegen zweckmäßigerweise nicht über den gesamten Umfang des Vollprofilstabes. Gemäß einer Ausführungsvariante ist dann in diesen Anlagebereichen zwischen Vollprofilstab und Innenwandung zumindest ein Durchströmkanal, vorzugsweise eine Mehrzahl von Durchströmkanälen zur Durchleitung des fluiden Mediums vorgesehen. - Grundsätzlich kann das Wärmeleitelement im Rahmen der Erfindung auch andere Formen aufweisen, beispielsweise in Form einer innen hohlen zylinderförmigen Wärmeleithülse ausgebildet sein. Besonders bevorzugt ist aber im Rahmen der Erfindung die Ausbildung des Wärmeleitelementes als Schraubenfeder.

Der Erfindung liegt die Erkenntnis zugrunde, dass mit der erfindungsgemäßen Verbinderanordnung bzw. Kraftfahrzeugverbinderanordnung eine einfache und wenig aufwendige sowie zugleich optimale Beheizung sowohl der Medienleitung als auch des Verbinders möglich ist. Dazu reicht im Rahmen der Erfindung grundsätzlich die elektrische Beheizung der Medienleitung aus sowie die indirekte Beheizung des Verbinders mit Hilfe des erfindungsgemäßen Wärmeleitelementes. Das Wärmeleitelement kann auf einfache und präzise Weise im Übergangsbereich zwischen Medienleitung und Verbinder eingebracht bzw. montiert werden. Das gilt vor allem für die erfindungsgemäße Ausgestaltung des Wärmeleitelementes als Schraubenfeder. Die Beheizung des Aggregates aus Medienleitung und Verbinder ist langfristig funktionssicher und effektiv möglich. Hervorzuheben ist, dass die Erfindung mit geringem Aufwand und geringen Kosten realisierbar ist. Eine aufwendige zusätzliche Beheizung des Verbinders ist im Rahmen der Erfindung grundsätzlich nicht erforderlich.

Nachfolgend wird die Erfindung anhand einer lediglich ein Ausführungsbeispiel darstellenden Zeichnung näher erläutert. Es zeigen in schematischer Darstellung:

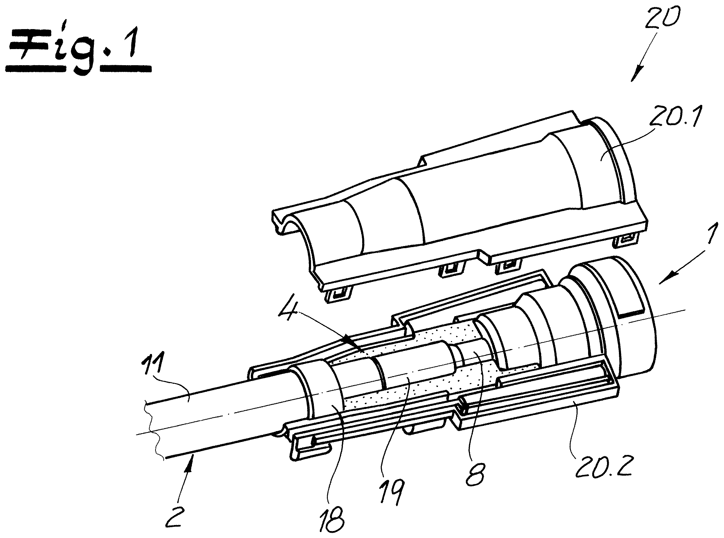

- Fig. 1: eine perspektivische Explosionsdarstellung einer erfindungsgemäßen Verbinderanordnung aus einem Schnellverbinder und einer daran angeschlossenen Medienleitung und
- Fig. 2: einen Schnitt durch den Gegenstand nach Fig. 1.

Die Figuren zeigen eine erfindungsgemäße Verbinderanordnung, die bevorzugt und im Ausführungsbeispiel als Kraftfahrzeugverbinderanordnung aus einem Verbinder 1 in Form eines Schnellverbinders und einer daran angeschlossenen Medienleitung 2 ausgebildet ist. Die Verbinderanordnung dient insbesondere zur Durchleitung eines fluiden Mediums eines Kraftfahrzeuges und zwar vorzugsweise zur Durchleitung einer wässrigen Harnstofflösung für das Katalysatorsystem eines Kraftfahrzeuges. Erfindungsgemäß wird die Medienleitung 2 elektrisch beheizt und zwar mit Hilfe eines um das Innenrohr 10 der Medienleitung 2 spiralförmig gewickelten Heizdrahtes 9.

Im Übergangsbereich 4 zwischen dem Verbinder 1 und der Medienleitung 2 ist ein erfindungsgemäßes Wärmeleitelement 3 angeordnet. Dieses Wärmeleitelement 3 erstreckt sich mit einem ersten Wärmeleitabschnitt 5 in die Medienleitung 2 und mit einem zweiten Wärmeleitabschnitt 6 in den Verbinder 1. Dabei erstreckt sich der erste Wärmeleitabschnitt 5 in einen - vorzugsweise und im Ausführungsbeispiel mit dem Heizdraht 9 - elektrisch beheizten Leitungsabschnitt 7 der Medienleitung 2. Zweckmäßigerweise und im Ausführungsbeispiel greift die Medienleitung 2 in den Verbinder 1 ein und zwar bevorzugt und im Ausführungsbeispiel unter anderem in einen Anschlussstutzen 8 des Verbinders 1.

Vorzugsweise und im Ausführungsbeispiel weist die Medienleitung 2 ein Innenrohr 10 und ein das Innenrohr 10 über zumindest den Großteil seiner Länge umgebendes Hüllrohr 11 auf. Der Heizdraht 9 ist dabei zwischen Innenrohr 10 und Hüllrohr 11 angeordnet und um das Innenrohr 10 gewickelt. Bevorzugt und im Ausführungsbeispiel ist die Medienleitung 2 bzw. das Innenrohr 10 der Medienleitung mit einem hüllrohrfreien an den Verbinder angeschlossenen Endabschnitt 12 ausgestattet. Der Endabschnitt 12 wird dabei von dem Heizdraht 9 elektrisch beheizt und zwar vorzugsweise und im Ausführungsbeispiel im Wesentlichen über seine gesamte Länge bzw. über den Großteil seiner Länge. Empfohlenermaßen und im Ausführungsbeispiel durchgreift der erste Wärmeleitabschnitt 5 des Wärmeleitelementes 3 den Endabschnitt 12 der Medienleitung 2 vollständig.

Gemäß bevorzugter Ausführungsform und im Ausführungsbeispiel liegt der in das Innenrohr 10 der Medienleitung 2 eingreifende erste Wärmeleitabschnitt 5 des Wärmeleitelementes 3 über seinen gesamten Umfang an der Innenwandung 13 des Innenrohres 10 bzw. des Endabschnittes 12 der Medienleitung 2 an. Erfindungsgemäß ist das Wärmeleitelement 3 als Schraubenfeder ausgebildet. Dieses als Schraubenfeder ausgeführte Wärmeleitelement 3 liegt mit dem ersten Wärmeleitabschnitt 5 zweckmäßigerweise und im Ausführungsbeispiel klemmend bzw. über Klemmsitz an der Innenwandung 13 des Innenrohres 10 bzw. des Endabschnittes 12 an. Empfohlenermaßen und im Ausführungsbeispiel nach den Figuren hat die Schraubenfeder über ihre gesamte Länge L den gleichen Zylinderumfang. Außerdem haben bevorzugt und im Ausführungsbeispiel die Windungen 17 der Schraubenfeder über die Länge L der Schraubenfeder gleiche Abstände voneinander.

Das erfindungsgemäße Wärmeleitelement 3 bzw. die im Rahmen der Erfindung eingesetzte Schraubenfeder erstreckt sich mit einem zweiten Wärmeleitabschnitt 6 in den Verbinder 1. Dabei ist bevorzugt und im Ausführungsbeispiel dieser zweite Wärmeleitabschnitt 6 der Schraubenfeder über dem größten Teil seiner Länge mit Abstand zur Innenwandung 14 des Verbinders 1 und mit Abstand zur Innenwandung 15 einer in den Verbinder 1 eingesteckten Rohrleitung 16 angeordnet. Durch den in den Verbinder 1 ragenden zweiten Wärmeleitabschnitt 6 wird der Verbinder 1 im Rahmen der Erfindung erwärmt bzw. beheizt. Dabei ist empfohlenermaßen und im Ausführungsbeispiel - abgesehen von dieser Erwärmung bzw. Beheizung durch das Wärmeleitelement 3 - keine weitere Beheizung, insbesondere keine elektrische Beheizung des Verbinders 1 vorgesehen.

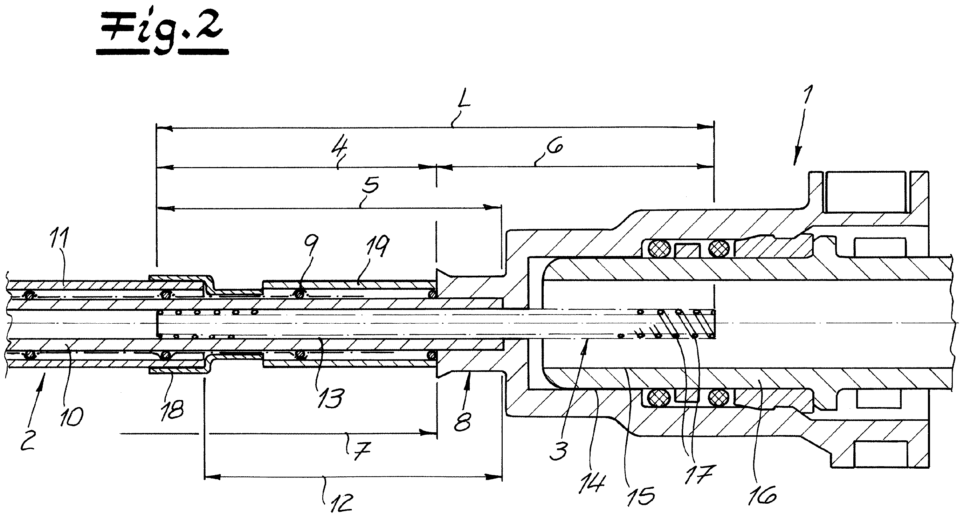

In der Fig. 2 ist erkennbar, dass bevorzugt und im Ausführungsbeispiel zwei Fixierungselemente zur Fixierung des Heizdrahtes 9 auf dem Endabschnitt 12 der Medienleitung 2 vorgesehen sind. Ein Fixierungselement ist in Form eines Schrumpfschlauchabschnittes 18 ausgebildet, der im Übergangsbereich zwischen dem Hüllrohr 11 und dem Endabschnitt 12 vorgesehen ist und sowohl das Ende des Hüllrohres 11 als auch den Anfang des Endabschnittes 12 abdeckt. Im Anschluss an diesem Schrumpfschlauchabschnitt 18 ist im Ausführungsbeispiel nach Fig. 2 ein weiteres Fixierungselement in Form einer zylinderförmigen Schutzhülse 19 auf dem Endabschnitt 12 aufgebracht, welche Schutzhülse 19 ebenfalls den Heizdraht 9 abdeckt bzw. schützt. - Empfohlenermaßen und im Ausführungsbeispiel ist der Verbinder 1 sowie der Endabschnitt 12 der Medienleitung 2 von einer äußeren Hülle in Form eines Gehäuses 20 umgeben. Dieses für den Verbinder 1 vorgesehene Gehäuse 20 deckt somit auch das Ende der Medienleitung 2 bzw. den Endabschnitt 12 der Medienleitung 2 ab. Vorzugsweise und im Ausführungsbeispiel deckt das Gehäuse 20 sowohl den Schrumpfschlauchabschnitt 18 als auch die zylinderförmige Schutzhülse 19 ab. Das Gehäuse 20 ist bevorzugt und im Ausführungsbeispiel in Form von zwei Gehäusehälften 20.1 und 20.2 ausgebildet.

Den Figuren ist weiterhin entnehmbar, dass das erfindungsgemäße Wärmeleitelement 3 in Form einer Schraubenfeder linear ausgebildet ist. Im Ausführungsbeispiel erstreckt sich der erste Wärmeleitabschnitt 5 des Wärmeleitelementes 3 außer durch den Endabschnitt 12 der Medienleitung 2 auch noch in einen daran angrenzenden von dem Hüllrohr 11 umgebenen kurzen Abschnitt der Medienleitung 2.

## Patentansprüche

1. Verbinderanordnung bzw. Kraftfahrzeugverbinderanordnung mit zumindest einem Verbinder (1) - insbesondere mit zumindest einem Schnellverbinder - und mit zumindest einer an den Verbinder (1) angeschlossenen Medienleitung (2) und mit zumindest einem Wärmeleitelement (3), wobei die Medienleitung (2) elektrisch beheizt ist, vorzugsweise mittels zumindest eines entlang der Medienleitung (2) verlaufenden Heizmittels elektrisch beheizt ist, wobei das Wärmeleitelement (3) im Übergangsbereich (4) zwischen Verbinder (1) und Medienleitung (2) angeordnet ist, wobei sich das Wärmeleitelement (3) mit einem ersten Wärmeleitabschnitt (5) in die Medienleitung (2) und mit einem zweiten Wärmeleitabschnitt (6) in den Verbinder (1) erstreckt und wobei durch die elektrische Beheizung der Medienleitung (2) das Wärmeleitelement (3) erwärmt wird bzw. indirekt erwärmt wird und insbesondere bis in den Bereich des Verbinders (1) erwärmt wird bzw. indirekt erwärmt wird, **dadurch gekennzeichnet, dass** das Wärmeleitelement (3) über zumindest einen Teil seiner Länge L, vorzugsweise über den Großteil seiner Länge L und bevorzugt über seine gesamte Länge L als Schraubenfeder ausgebildet ist.

2. Verbinderanordnung nach Anspruch 1, **dadurch gekennzeichnet, dass** sich zumindest 15 %, vorzugsweise zumindest 20 % und bevorzugt zumindest 25 % sowie sehr bevorzugt zumindest 30 % der Länge des Wärmeleitelementes in einen elektrisch beheizten Leitungsabschnitt (7) der Medienleitung (2) erstrecken.

3. Verbinderanordnung nach einem der Ansprüche 1 oder 2, **dadurch gekennzeichnet, dass** die Medienleitung (2) in den Verbinder (1) eingreift und vorzugsweise mit dem Verbinder (1) verbunden ist, insbesondere stoffschlüssig verbunden ist.

4. Verbinderanordnung nach einem der Ansprüche 1 bis 3, **dadurch gekennzeichnet, dass** die Medienleitung (2) mittels zumindest eines um die Medienleitung (2) gewickelten Heizmittels bzw. Heizelementes, insbesondere mittels zumindest eines um die Medienleitung (2) gewickelten Heizdrahtes (9) elektrisch beheizbar ist.

5. Verbinderanordnung nach einem der Ansprüche 1 bis 4, **dadurch gekennzeichnet, dass** die Medienleitung (2) ein Innenrohr (10) und zumindest ein das Innenrohr (10) zumindest bereichsweise umgebendes Hüllrohr (11) aufweist und wobei vorzugsweise das zumindest eine Heizmittel bzw. Heizelement, insbesondere der zumindest eine Heizdraht (9) zwischen Innenrohr (10) und Hüllrohr (11) angeordnet ist und empfohlenermaßen um das Innenrohr (10) gewickelt ist.

6. Verbinderanordnung nach einem der Ansprüche 1 bis 5, **dadurch gekennzeichnet, dass** die Medienleitung (2) bzw. das Innenrohr (10) der Medienleitung (2) einen hüllrohrfreien an dem Verbinder angeschlossenen Endabschnitt (12) aufweist, wobei der Endabschnitt (12) zumindest bereichsweise elektrisch beheizt ist und wobei vorzugsweise zumindest ein Fixierungselement zur Fixierung zumindest eines Heizmittels bzw. Heizelementes auf dem Endabschnitt (12) angeordnet bzw. befestigt ist.

7. Verbinderanordnung nach Anspruch 6, **dadurch gekennzeichnet, dass** das Wärmeleitelement (3) mit dem ersten Wärmeleitabschnitt (5) in den Endabschnitt (12) bzw. in den elektrisch beheizten Endabschnitt (12) der Medienleitung (2) eingreift.

8. Verbinderanordnung nach einem der Ansprüche 1 bis 7, **dadurch gekennzeichnet, dass** das Wärmeleitelement (3) lediglich indirekt beheizt wird und keine direkte Beheizung bzw. keine direkte elektrische Beheizung des Wärmeleitelementes (3) erfolgt.

9. Verbinderanordnung nach einem der Ansprüche 1 bis 8, **dadurch gekennzeichnet, dass** das Wärmeleitelement (3) bzw. der erste Wärmeleitabschnitt (5) des Wärmeleitelementes (3) an der Innenwandung (13) der Medienleitung (2) anliegt und insbesondere an der Innenwandung (13) des Endabschnittes (12) der Medienleitung (2) anliegt.

10. Verbinderanordnung nach Anspruch 9, **dadurch gekennzeichnet, dass** das Wärmeleitelement (3) zumindest bereichsweise mit bzw. über Klemmsitz an der Innenwandung (13) der Medienleitung (2) bzw. des Endabschnittes (12) der Medienleitung (2) anliegt und vorzugsweise über seinen gesamten Umfang bzw. im Wesentlichen über seinen gesamten Umfang an der Innenwandung (13) der Medienleitung (2) bzw. des Endabschnittes (12) der Medienleitung (2) anliegt.

11. Verbinderanordnung nach einem der Ansprüche 1 bis 10, **dadurch gekennzeichnet, dass** das Wärmeleitelement (3) zumindest bereichsweise mit Abstand zur Innenwandung (14) des Verbinders (1) und/oder mit Abstand zur Innenwandung (15) einer an den Verbinder (1) angeschlossenen bzw. in den Verbinder (1) eingesteckten Rohrleitung (16) angeordnet ist.

12. Verbinderanordnung nach einem der Ansprüche 1 bis 11, **dadurch gekennzeichnet, dass** sich zumindest 20 %, vorzugsweise zumindest 25 % und bevorzugt zumindest 30 % der Länge des Wärmeleitelementes (3) in den Verbinder (1) erstrecken.

13. Verbinderanordnung nach einem der Ansprüche 1 bis 12, **dadurch gekennzeichnet, dass** der Verbinder (1) - abgesehen von der Erwärmung bzw. Beheizung durch das Wärmeleitelement (3) - unbeheizt ausgeführt ist, insbesondere ohne elektrische Beheizung ausgebildet ist.

14. Verbinderanordnung nach einem der Ansprüche 1 bis 13, **dadurch gekennzeichnet, dass** das Wärmeleitelement (3) linear bzw. im Wesentlichen linear ausgebildet ist.

15. Verbinderanordnung nach einem der Ansprüche 1 bis 14, **dadurch gekennzeichnet, dass** das Wärmeleitelement (3) über zumindest einen Teil seiner Länge L, vorzugsweise über den Großteil seiner Länge L als Vollprofilstab ausgebildet ist.

16. Verbinderanordnung nach einem der Ansprüche 1 bis 15, **dadurch gekennzeichnet, dass** der Verbinder eine äußere Schutzhülle aufweist und wobei bevorzugt die äußere Schutzhülle sowohl den Verbinder als auch zumindest bereichsweise den Endabschnitt der Medienleitung abdeckt und wobei die äußere Schutzhülle bevorzugt als Gehäuse aus mehreren Gehäuseabschnitten oder als Umspritzung mit einem Kunststoff realisiert ist.

## Claims

1. A connector arrangement or vehicle connector arrangement with at least one connector (1)-in particular with at least one quick connector and with at least one media line (2) hooked up to the connector (1) and with at least one heat conducting element (3), wherein the media line (2) is electrically heated, preferably by means of at least one heating medium running along the media line (2), wherein the heat conducting element (3) is arranged in the transition area (4) between the connector (1) and media line (2), wherein the heat conducting element (3) extends into the media line (2) with a first heat conducting section (5) and into the connector (1) with a second heat conducting section (6), and wherein electrically heating the media line (2) heats or indirectly heats the heat conducting element (3), and in particular heats or indirectly heats it until into the area of the connector (1), **characterized in that** the heat conducting element (3) is designed as a helical spring over at least a portion of its length L, preferably over the majority of its length L, and particularly over its entire length L.

2. The connector arrangement according to claim 1, **characterized in that** at least 15%, particularly at least 20%, and preferably at least 25%, as well as very preferably at least 30% of the length of the heat conducting element extends in an electrically heated line section (7) of the media line (2).

3. The connector arrangement according to one of claims 1 or 2, **characterized in that** the media line (2) engages into the connector (1), and is preferably connected with the connector (1), in particular integrally connected therewith.

4. The connector arrangement according to one of claims 1 to 3, **characterized in that** the media line (2) can be electrically heated by means of at least one heating means or heating element would around the media line (2), in particular by means of at least one heating wire (9) wound around the media line (2).

5. The connector arrangement according to one of claims 1 to 4, **characterized in that** the media line (2) has an inner pipe (10) and at least one cladding tube (11) that at least regionally envelops the inner pipe (10), and wherein preferably the at least one heating means or heating element, in particular the at least one heating wire (9), is arranged between the inner pipe (10) and cladding tube (11), and wound around the inner pipe (10) as recommended.

6. The connector arrangement according to one of claims 1 to 5, **characterized in that** the media line (2) or inner pipe (10) of the media line (2) has a cladding tube-free end section (12) connected to the connector, wherein the end section (12) is at least regionally electrically heated, and wherein preferably at least one fixing element is arranged or fastened to fix at least one heating means or heating element on the end section (12).

7. The connector arrangement according to claim 6, **characterized in that** the heat conducting element (3) with the first heat conducting section (5) engages into the end section (12) or into the electrically heated end section (12) of the media line (2).

8. The connector arrangement according to one of claims 1 to 7, **characterized in that** the heat conducting element (3) is only indirectly heated, and no direct heating or no direct electrical heating of the heat conducting element (3) takes place.

9. The connector arrangement according to one of claims 1 to 8, **characterized in that** the heat conducting element (3) or the first heat conducting section (5) of the heat conducting element (3) abuts against the inner wall (13) of the media line (2), and in particular abuts against the inner wall (13) of the end section (12) of the media line (2).

10. The connector arrangement according to claim 9, **characterized in that** the heat conducting element (3) at least regionally, with or via a clamping fit, abuts against the inner wall (13) of the media line (2) or the end section (12) of the media line (2), and preferably abuts over its entire periphery or essentially over its entire periphery against the inner wall (13) of the media line (2) or the end section (12) of the media line (2).

11. The connector arrangement according to one of claims 1 to 10, **characterized in that** the heat conducting element (3) at least regionally is arranged at a distance to the inner wall (14) of the connector (1) and/or at a distance to the inner wall (15) of a pipe (16) that is connected to the connector (1) or inserted into the connector (1).

12. The connector arrangement according to one of claims 1 to 11, **characterized in that** at least 20%, particularly at least 25%, and preferably at least 30% of the length of the heat conducting element (3) extends into the connector (1).

13. The connector arrangement according to one of claims 1 to 12, **characterized in that** the connector (1)-apart from being warmed or heated by the heat conducting element (3)-is unheated in design, in particular designed without electrical heating.

14. The connector arrangement according to one of claims 1 to 13, **characterized in that** the heat conducting element (3) is linear or essentially linear in design.

15. The connector arrangement according to one of claims 1 to 14, **characterized in that** the heat conducting element (3) is designed as a full section rod over at least a portion of its length L, preferably over the majority of its length L.

16. The connector arrangement according to one of claims 1 to 15, **characterized in that** the connector has an outer protective sheath, and wherein the outer protective sheath preferably covers both the connector and at least regionally the end section of the media line, and wherein the outer protective sheath is preferably realized as a housing comprised of several housing sections or overmolded with a plastic.

## Revendications

1. Système de connecteur ou système de connecteur de véhicule automobile avec au moins un connecteur (1), notamment avec au moins un connecteur rapide, et avec au moins une conduite de fluide (2) raccordée au connecteur (1) et avec au moins un élément thermo-conducteur (3), la conduite de fluide (2) étant chauffée électriquement, étant chauffé électriquement de préférence au moyen d'au moins un milieu de chauffage passant le long de la conduite de fluide (2), l'élément thermo-conducteur (3) étant disposé dans la zone de transfert (4) entre le connecteur (1) et la conduite de fluide (2), l'élément thermo-conducteur (3) s'étendant avec une première section thermo-conductrice (5) dans la conduite de fluide (2) et avec une deuxième section thermo-conductrice (6) dans le connecteur (1) et l'élément thermo-conducteur (3) étant réchauffé ou indirectement réchauffé par le chauffage électrique de la conduite de fluide (2) et étant notamment réchauffé ou indirectement réchauffé jusque dans la zone du connecteur (1) **caractérisé en ce que** l'élément thermo-conducteur (3) est constitué comme ressort hélicoïdal sur au moins une partie de sa longueur L, de préférence sur la majeure partie de sa longueur L et de préférence sur toute sa longueur L.

2. Système de connecteur selon la revendication 1, **caractérisé en ce qu'**au moins 15%, de préférence au moins 20% et de préférence au moins 25% ainsi que façon plus préférée au moins 30% de la longueur de l'élément thermo-conducteur s'étendent dans une section de conduite chauffée électriquement (7) de la conduite de fluide (2).

3. Système de connecteur selon l'une quelconque des revendications 1 ou 2, **caractérisé en ce que** la conduite de fluide (2) vient en prise dans le connecteur (1) et est reliée de préférence au connecteur (1), notamment reliée par conformité de matière.

4. Système de connecteur selon l'une quelconque des revendications 1 à 3, **caractérisé en ce que** la conduite de fluide (2) peut être chauffée électriquement au moyen d'au moins un moyen de chauffage ou élément de chauffage enroulé autour de la conduite de fluide (2), notamment au moyen d'au moins un fil chauffant (9) enroulé autour de la conduite de fluide (2).

5. Système de connecteur selon l'une quelconque des revendications 1 à 4, **caractérisé en ce que** la conduite de fluide (2) comporte un tube intérieur (10) et au moins un tube de gainage (11) entourant au moins par zone le tube intérieur (10) et de préférence au moins un moyen de chauffage ou élément de chauffage, notamment au moins un fil chauffant (9) étant disposé entre le tube intérieur (10) et le tube de gainage (11) et étant de façon recommandée enroulé autour du tube intérieur (10) .

6. Système de connecteur selon l'une quelconque des revendications 1 à 5, **caractérisé en ce que** la conduite de fluide (2) ou le tube intérieur (10) de la conduite de fluide (2) comporte une section finale (12) sans tube de gainage raccordée au connecteur, la section finale (12) étant électriquement chauffée au moins par zone et un élément de fixation pour la fixation d'au moins un moyen de chauffage ou élément de chauffage étant de préférence au moins disposé ou fixé sur la section finale (12).

7. Système de connecteur selon la revendication 6, **caractérisé en ce que** l'élément thermo-conducteur (3) vient en prise avec la première section thermo-conductrice (5) dans la section finale (12) ou dans la section finale électriquement chauffée (12) de la conduite de fluide (2).

8. Système de connecteur selon l'une quelconque des revendications 1 à 7, **caractérisé en ce que** l'élément thermo-conducteur (3) n'est qu'indirectement chauffé et qu'aucun chauffage direct ou aucun chauffage électrique direct de l'élément thermo-conducteur (3) n'a lieu.

9. Système de connecteur selon l'une quelconque des revendications 1 à 8, **caractérisé en ce que** l'élément thermo-conducteur (3) ou la première section thermo-conductrice (5) de l'élément thermo-conducteur (3) adhère à la paroi intérieure (13) de la conduite de fluide (2) et adhère notamment à la paroi intérieure (13) de la section finale (12) de la conduite de fluide (2) .

10. Système de connecteur selon la revendication 9, **caractérisé en ce que** l'élément thermo-conducteur (3) adhère au moins par zone avec ou par ajustement serré à la paroi intérieure (13) de la conduite de fluide (2) ou de la section finale (12) de la conduite de fluide (2) et adhère de préférence sur toute sa périphérie ou pour l'essentiel sur toute sa périphérie à la paroi intérieure (13) de la conduite de fluide (2) ou de la section finale (12) de la conduite de fluide (2).

11. Système de connecteur selon l'une quelconque des revendications 1 à 10, **caractérisé en ce que** l'élément thermo-conducteur (3) est disposé au moins par zone à distance de la paroi intérieure (14) du connecteur (1) et/ou à distance de la paroi intérieur (15) d'une conduite (16) raccordée au connecteur (1) ou emboîtée dans le connecteur (1).

12. Système de connecteur selon l'une quelconque des revendications 1 à 11, **caractérisé en ce qu'**au moins 20 %, de préférence au moins 25 % et de préférence au moins 30 % de la longueur de l'élément thermo-conducteur (3) s'étendent dans le connecteur (1).

13. Système de connecteur selon l'une quelconque des revendications 1 à 12, **caractérisé en ce que** le connecteur (1), est exécuté non chauffé, abstraction faite du réchauffement ou du chauffage par l'élément thermo-conducteur (3), est notamment constitué sans chauffage électrique.

14. Système de connecteur selon l'une quelconque des revendications 1 à 13, **caractérisé en ce que** l'élément thermo-conducteur (3) est constitué de façon linéaire ou pour l'essentiel de façon linéaire.

15. Système de connecteur selon l'une quelconque des revendications 1 à 14, **caractérisé en ce que** l'élément thermo-conducteur (3) est constitué comme une barre profilée pleine sur au moins une partie de sa longueur L, de préférence sur la majeure partie de sa longueur L.

16. Système de connecteur selon l'une quelconque des revendications 1 à 15, **caractérisé en ce que** le connecteur comporte une gaine de protection extérieure, la gaine de protection extérieure couvrant de préférence tant le connecteur qu'au moins par zone la section finale de la conduite de fluide et la gaine de protection extérieure étant réalisée de préférence comme boîtier à partir de plusieurs sections de boîtier ou comme un élément enrobé par injection avec une matière plastique.
